# FASCICULE DE BREVET EUROPEEN

(11) **EP 3 743 267 B1**
(45) Date de publication et mention de la délivrance du brevet: **24.04.2024**
(21) Numéro de dépôt: 19704664.2
(22) Date de dépôt: 21.01.2019
(51) Int. Cl.: B29C 65/56, E04F 15/00

(54) **PROCEDE DE FABRICATION D'UN PANNEAU DE REVETEMENT EN MATIERE PLASTIQUE**
VERFAHREN ZUR HERSTELLUNG EINER AUS KUNSTSTOFF GEFERTIGTEN VERKLEIDUNGSPLATTE
METHOD FOR MANUFACTURING A COVERING PANEL MADE OF PLASTIC MATERIAL

(30) Priorité: 22.01.2018 FR 1850487; 16.03.2018 BE 201805173
(43) Date de publication de la demande: 02.12.2020
(73) Titulaire: Inovame, 67120 Duppigheim (FR); Kreafin Group SA, 2530 Luxembourg (LU)
(72) Inventeur: MICLO, Thierry, 67800 HOENHEIM (FR)
(74) Mandataire: Chielens, Kristof
(86) Numéro de dépôt international: PCT/FR2019/050116
(87) Numéro de publication internationale: WO 2019/141954

(56) Documents cités:
- EP-A1- 3 121 348
- WO-A1-2012/001503
- WO-A2-2007/141605
- US-A1- 2008 124 654

## Description

### Domaine de l'invention

La présente invention se rapporte à un procédé de fabrication d'un panneau de revêtement en matière plastique, à deux paires de côtés parallèles, pour être assemblé par ses paires de côtés à d'autres panneaux de même type dont les paires de côtés ont des profils d'assemblage homologues, un dessus et un dessous. Le panneau a une paire de côtés, pour être assemblés par le pivotement du côté d'un panneau dans le côté homologue d'un autre panneau déjà posé, et une autre paire de côtés, pour être assemblés par imbrication de formes et enclipsage par le mouvement de pivotement du panneau dans le côté homologue d'un autre panneau déjà posé.

En pratique, les panneaux de revêtement sont généralement des lames dont la première paire de côtés sert à l'assemblage par pivotement des panneaux d'une ligne de pose d'une ligne à l'autre et la deuxième paire de côtés transversaux réalise l'assemblage par enclipsage.

De façon plus generale, l'invention a pour objet un procédé de fabrication d'un panneau de revêtement de sol ou de mur ayant des côtés parallèles deux à deux, notamment un panneau rectangulaire en forme de lame ou de dalle en matière plastique telle que du PVC. Ce panneau est le cas échéant muni d'une face de décor imitant un revêtement naturel tel que du bois, de la pierre ou de la céramique ou encore un décor créatif.

Plus précisément, l'invention a pour objet un procédé de fabrication d'un panneau de revêtement en matière plastique, à deux paires de côtés parallèles, pour être assemblé par ses paires de côtés à d'autres panneaux de même type dont les paires de côtés ont des profils d'assemblage complémentaires homologues, chaque panneau posé dans la ligne de pose suivante en étant assemblé par pivotement d'un côté d'une paire dans le côté complémentaire homologue d'un autre panneau déjà posé dans la première ligne de pose, ce pivotement réalisant également l'imbrication de formes et l'enclipsage du côté transversal de l'autre paire dans le côté transversal complémentaire homologue de l'autre panneau déjà posé dans la ligne de pose de ce panneau en cours de pose, la paire de côtés pour l'assemblage par imbrication de formes et enclipsage ayant un premier côté transversal et un second côté transversal.

L'invention se rapporte également aux panneaux réalisés selon ce procédé.

### Etat de la technique

Les panneaux de revêtement ont en général deux côtés parallèles á forme complémentaire mâle/femelle qui permettent un assemblage pour engager un côté mâle d'un panneau á poser dans le côté femelle du ou des panneaux posés et rabattement (pivotement/basculement) pour réaliser ainsi l'assemblage résistant aux efforts de traction et de com-pression dans le plan de pose et dans une direction perpendiculaire á la ligne de jonction ainsi qu'aux efforts « verticaux » de soulèvement perpendiculaires au plan de pose.

De tels panneaux et leur système d'assemblage sont décrits dans une documentation très nombreuse, par exemple dans les brevets EP 562 402, EP 085 196, EP 843 763, EP 1 669 512.

Cette documentation concerne l'assemblage par pivotement, en général pour la liaison des « grands dités » des panneaux rectangulaires, no-tamment en forme de lames, alors que les « petits côtés » ont des profils complémentaires qui s'assemblent d'un panneau á l'autre au moment du pivotement du panneau á poser, réalisant une liaison mécanique résistant aux efforts dans le plan de pose et dans la direction perpendiculaire au plan de pose.

Cette liaison est complétée dans certains cas par l'enclipsage d'une languette élastique ou par une languette rigide de verrouillage activée manuellement après avoir réalisé l'assemblage par pivotement (EP 1 669 512).

L'assemblage par enclipsage est notamment décrit dans le document EP 2 194 210 qui concerne un panneau dont le côté transversal d'enclipsage est muni d'une languette élastique, rapportée dans une rainure du côté usiné du panneau. Cette languette escamotable lors du mouvement de pivotement réalisée séparément, est en un matériau souple. Elle est encastrée dans une rainure du côté du panneau qui, lui, est en une matière rigide telle que du medium.

Mais ces différents moyens de blocage dans la direction perpendiculaire au plan de pose ne peuvent s'appliquer qu'à des panneaux ayant une épaisseur suffisante pour recevoir un organe de verrouillage mécanique ou élastique. Ils ne conviennent pas à des panneaux minces tells que des lames LVT de revêtement en PVC ou en une autre matière plastique et dont l'épaisseur est de l'ordre de 4 à 5 mm.

WO 2007/141605 décrit un revêtement de sol, constitué d'éléments de sol, qui, au moins sur deux côtés opposés, comprennent une partie d'accouplement mâle et femelle, qui permettent que deux de ces éléments de plancher puissent être interconnectés sur les côtés respectifs sur les côtés respectifs en poussant l'un de ces éléments de plancher avec la partie d'accouplement mâle associée, au moyen d'un mouvement vers le bas, pour le rentrer dans la partie d'accouplement femelle de l'autre élément de plancher, où qu'au moins une desdites pièces d'accouplement, soit la pièce d'accouplement mâle soit la pièce d'accouplement femelle, est réalisée au moins partiellement dans un composite de matière synthétique chargé, comme le bois extrudé.

WO 2012/001503 décrit un procédé pour réaliser un panneau de revêtement en une matière plastique comprenant les étapes suivantes : la formation d'un profil en forme de plaque à partir de plastique ; le sciage du profil formé à la longueur souhaitée ; l'exécution d'une opération d'usinage sur les côtés d'extrémité du profil scié afin de former les moyens de raccord et les premiers moyens de verrouillage vertical.

EP 3 121 348 divulgue un panneau de revêtement en matière plastique comportant deux paires de côtés parallèles, pour être assemblé à d'autres panneaux de même type dont les paires de côtés ont des profil d'assemblage homologues.

### But de l'invention

La présente invention a pour but de développer un procédé de fabrication d'un panneau de revêtement en une matière plastique pour un assemblage par enclipsage d'au moins un côté muni d'une languette de verrouillage.

L'invention a également pour but de développer un panneau de revêtement en une matière plastique pour un assemblage par enclipsage d'au moins un côté muni d'une languette de verrouillage et notamment des petits côtés des panneaux par ailleurs engagés l'un dans l'autre par un mouvement de pivotement dans des formes complémentaires des deux grands côtés.

### Exposé et avantages de l'invention

A cet effet, l'invention a pour objet un procédé de fabrication d'un panneau de revêtement en matière plastique, à deux paires de côtés parallèles, pour être assemblé par ses paires de côtés à d'autres panneaux de même type dont les paires de côtés ont des profils d'assemblage com-plémentaires, un dessus et un dessous, les côtés des panneaux étant assemblés selon des plans de jonction, chaque panneau ayant une paire de côtés pour l'assemblage par le pivotement du côté d'un panneau dans le côté homologue d'un autre panneau déjà posé, un premier dité transversal ayant un plan de jonction au bord du dessus du panneau se poursuit par une cavité de verrouillage débouchant vers le des-sus et par un crochet,

le second côté transversal, homologue au premier côté ayant un bord supérieur dans le plan de jonction terminant une avancée et séparée du corps du panneau par une cavité d'assemblage d'un panneau coiffant le crochet d'un autre panneau et l'avancée se logeant dans la cavité de cet autre panneau, ce procédé étant caractérisé en ce que
- on forme l'ébauche de la paire de côtés transversaux en donnant au premier côté sa section définitive et réalisant sur le second côté, une cavité d'assemblage débouchant dans le dessous du profilé et une avancée munie d'un bec arrivant dans le plan de jonction et suivie d'un dégagement en retrait du plan de jonction et dont le fond qui rejoint une amorce de gorge et se prolonge par une languette en saillie de la base de l'avancée,
- on chauffe localement la zone de la base de la languette,
- puis lorsque cette zone est ramollie, on relève la languette en direction du dégagement pour former le verrou, et
- on stabilise la forme en la refroidissant pour obtenir le panneau dont les deux côtés transversaux ont leur forme définitive.

Ce procédé permet de réaliser un panneau de revêtement en une matière plastique permettant un verrouillage efficace et durable des côtés assemblés par enclipsage, malgré la très faible épaisseur de tels panneaux.

Le procédé de fabrication évite la formation et le développement d'amorces de rupture á la base du verrou conférant une excellente fiabilité du verrou exposé á d'incessants mouvements de compression et de détente sous l'effet des personnes marchant sur le dessus du revêtement de sol formé par l'assemblage de tels panneaux.

En général, le verrouillage concerne les petits côtés des panneaux de revêtement puisqu'il est plus facile et plus simple d'assembler les grands côtés par le seul mouvement de pivotement des lames.

Suivant une autre caractéristique particulièrement avantageuse, on forme l'ébauche de la paire de dités transversaux en usinant par frai-sage le premier côtéá sa section définitive et en usinant par fraisage, on forme sur le second dné, une cavité d'assemblage débouchant dans le dessous du profilé et une avancée munie d'un bec et suivie d'un dégagement en retrait du plan de jonction et dont le fond se poursuit par un appui courbe convexe qui rejoint une amorce de gorge et se prolonge par la languette en saillie de la base de l'avancée.

Suivant une autre caractéristique avantageuse, on usine au moins l'un des côtés par fraisage.

Suivant une autre caractéristique avantageuse, on forme le profilé avec une gorge arrondie reliant l'appui courbe et le côté de la base de la languette.

Suivant une autre caractéristique avantageuse, on forme la languette avec une inclinaison d'angle par rapport au plan de jonction du panneau qui est supérieur à 90°.

Le procédé de l'invention permet de réaliser de manière simple et économique un panneau de revêtement en matière plastique enclipsable par deux côtés, tout en laissant un intervalle entre le verrou et le fonddu dégagement favorisant l'escamotage du verrou pendant l'assemblage, au passage du bec qui arrive dans le plan de jonction malgré les très petites dimensions de la lamelle formant le verrou.

L'invention a également pour objet un procédé de fabrication d'un panneau de revêtement en matière plastique comportant deux paires de côtés parallèles, pour être assemblé à d'autres panneaux de même type dont les paires de côtés ont des profils d'assemblage homologues. Le panneau a :
- une paire de côtés, pour l'assemblage par le pivotement du côté d'un panneau dans le côté homologue d'un autre panneau déjà posé, et
- une paire de côtés transversaux, pour l'assemblage par imbrication de formes et enclipsage par ce mouvement de pivotement dans le côté transversal homologue d'un autre panneau déjà posé,
- le premier côté de cette paire de côtés comportant un crochet et une première cavité d'assemblage,
   * débouchant dans le dessus du panneau,
   * traversée par le plan de jonction des deux côtés, et ayant
   * une cavité de verrouillage en retrait du plan de jonction et dont le côté supérieur forme une surface d'appui,
- le deuxième côté de cette paire de côtés ayant une deuxième cavité d'assemblage débouchant dans le dessous du panneau pour recevoir le premier crochet du panneau adjacent, et un crochet retourné formant une avancée pour venir dans la première cavité d'assemblage du premier côté de ce panneau adjacent,
   * la face de l'avancée comportant un bec dont la surface d'appui est dans le plan de jonction pour atteindre le dessus du panneau,
   * un dégagement en retrait du plan de jonction se poursuivant vers le dessous par un verrou, souple, en forme de languette inclinée, orientée vers le dessus et dont la base est issue de l'avancée,
   ce procédé étant caractérisé en ce que
- on usine par fraisage la section de l'ébauche de la paire de côtés transversaux en donnant au premier côté sa section définitive et par usinage par fraisage, on forme sur le second côté, une cavité d'assemblage débouchant dans le dessous du profilé et une avancée munie d'un bec et suivie d'un dégagement en retrait du plan de jonction et dont le fond se poursuit par un appui courbe convexe qui rejoint une amorce de gorge et se prolonge par une languette en saillie de la base de l'avancée,
- on chauffe localement la zone de la base de la languette,
- puis lorsque cette zone est ramollie, on relève la languette en direction du dégagement pour former le verrou,
   - on stabilise la forme en la refroidissant pour obtenir la forme définitive des deux côtés transversaux du panneau.

L'invention a également pour but de développer un panneau de revêtement en une matière plastique pour un assemblage par enclipsage d'au moins un côté muni d'une languette de verrouillage et notamment des petits côtés des panneaux par ailleurs engagés l'un dans l'autre par un mouvement de pivotement dans des formes complémentaires des deux grands côtés.

Le panneau de revêtement en matière plastique comporte deux paires de côtés parallèles, pour être assemblé à d'autres panneaux de même type dont les paires de côtés ont des profils d'assemblage homologues, le panneau ayant :
- une paire de côtés, pour l'assemblage par le pivotement du côté d'un panneau dans le côté homologue d'un autre panneau déjà posé, et
- une paire de côtés transversaux, pour l'assemblage par imbrication de formes et enclipsage par ce mouvement de pivotement, dans le côté transversal homologue d'un autre panneau déjà posé,
- le premier côté de cette paire de côtés comportant un crochet et une première cavité d'assemblage,
   * débouchant dans le dessus du panneau,
   * traversée par le plan de jonction des deux côtés, et ayant
   * une cavité de verrouillage en retrait du plan de jonction et dont le côté supérieur forme une surface d'appui,
- le deuxième côté de cette paire de côtés ayant une deuxième cavité d'assemblage débouchant dans le dessous du panneau pour recevoir le premier crochet du panneau adjacent, et un crochet retourné formant une avancée pour venir dans la première cavité d'assemblage du premier côté de ce panneau adjacent,
   * la face de l'avancée comportant un bec dont la surface d'appui est dans le plan de jonction pour atteindre le dessus du panneau,
   * un dégagement en retrait du plan de jonction se poursuivant vers le dessous par un verrou, souple, en forme de languette inclinée, orientée vers le dessus et dont la base est issue de l'avancée.

Selon une autre caractéristique le dégagement en retrait du plan de jonction rejoint une amorce de gorge et se prolonge par la languette en saillie de la base de l'avancée, qui est relevée en direction du dégagement pour former le verrou.

Le panneau obtenu par le procédé de l'invention est particulièrement simple à poser grá ce à l'appui courbe, convexe, contre lequel le verrou se déforme élastiquement pour s'escamoter et revenir ensuite de ma-nière élastique dans la cavité de verrouillage. Cette élasticité très efficace et fiable repose principalement sur la déformation du verrou et non sur la sollicitation de la base du verrou. Cette base dont la mise en forme est permanente, constitue un appui très résistant pour le verrou.

Suivant une autre caractéristique avantageuse le dégagement en re-trait du plan de jonction a un fond qui se poursuit par un appui courbe, convexe rejoignant l'amorce de gorge et se prolongeant par la languette.

Cette forme de réalisation du dégagement facilite l'imbrication des deux formes complémentaires du panneau posé du panneau en cours de pose.

Suivant une autre caractéristique avantageuse le panneau a un fond de gorge arrondi reliant l'appui courbe et le côté de la base de la lanquette.

Sur une autre caractéristique avantageuse la lamelle est choisie dans le groupe comprenant :
une lamelle avec une réduction locale d'épaisseur
une lamelle avec une base agrandie par rapport á l'épaisseur de la lamelle qui va en diminuant vers son extrémité,
une lamelle avec une base réduite par rapport á l'épaisseur de la lamelle allant en augmentant vers son extrémité et
une lamelle avec une assise augmentée.

Ces différentes formes de lamelles pour obtenir par thermoformage le verrou sont des formes particulières avantageuses selon la nature de la matière plastique dans laquelle est réalisé le panneau.

Suivant une autre caractéristique avantageuse les deux côtés transver-saux se terminent chacun par un crochet précédé d'une cavité d'assemblage correspondante, le crochet du premier côté transversal d'un panneau étant engagé dans la cavité du deuxième côté transversal d'un panneau précédent et réci-proquement, la cavité du deuxième côté transversal du panneau recevant le crochet du premier côté transversal du panneau suivant, la face formant le bec d'un crochet d'un panneau est munie d'une cavité de verrouillage dont le côté forme une surface d'appui du verrou du panneau précédent et la face formant le nez au dessus de la cavité d'assemblage du panneau précédent est suivie d'un verrou en dessous du nez.

Ce panneau de revêtement a l'avantage de réaliser l'assemblage des petits côtés d'une manière particulièrement efficace.

### Dessins

Le procédé selon l'invention sera décrit ci-après de manière plus détaillée á l'aide d'exemples de mise en ceuvre représentés dans les dessins annexés dans lesquels :
- [la figure 1] est une section schématique d'un panneau de revêtement en matière plastique, réalisé selon le procédé de l'invention,
- [la figure 2] est une vue en coupe partielle de l'assemblage de deux panneaux selon l'invention,
- [la figure 3], dans ses parties I-IV, représente les différentes étapes de fabrication d'un panneau de revêtement par le procédé de l'invention,
- [la figure 4] est une vue en coupe á échelle agrandie du c&té d'un profilé muni d'une languette de verrouillage, dans sa forme en fin d'usinage,
- [la figure 5] est une vue en coupe du profilé selon l'invention á la fin du procédé de fabrication,
- [la figure 6], dans ses parties 6A, 6B, représente le mouvement d'assemblage par rabattement de deux panneaux selon l'invention.
- [La - figure 7] dans ses parties 7a-7d montrent différentes forms d'usinage de la languette pour obtenir des verrous ayant des caractéristiques différentes en fonction notamment de la nature des ma-tières plastiques des panneaux,
- [La figure 8] est une vue en coupe d'un autre mode de réalisation d'un panneau,
- [La figure 9] montre le mouvement d'assemblage de deux panneaux selon la forme de réalisation de la figure 8.
- [La figure 10] dans ses parties 10a-10c montre les différentes étapes de fabrication des deux côtés usinés dont l'un est thermo-formé d'un panneau selon l'invention, la partie 10d montrant l'assemblage de deux panneaux á la fin du mouvement d'assemblage schématisé á la figure 9.

### Description de modes de réalisation de l'invention

Pour la compréhension du problème résolu par le procédé de l'invention, il est indispensable de décrire de façon détaillée la structure du panneau de revêtement dont les deux côtés complémentaires sont directement concernés par le procédé de fabrication.

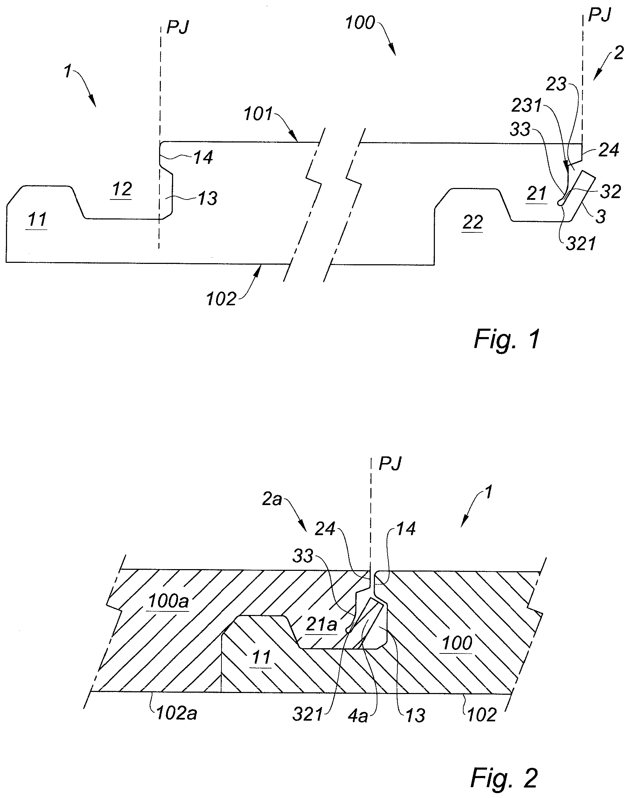

La figure 1 montre la section (profil) d'un panneau de revêtement (100) de sol, de mur ou de cloison en une matière plastique. Le dessus (101) du panneau est muni d'un décor et le dessous (102) peut être muni d'une nappe d'isolation ; le décor et la nappe d'isolation sont inté-grés tout deux dans le panneau mais ne sont pas mis en évidence sur les dessins. Le panneau (100) est un panneau rectangulaire allongé en lame ou carré.

Le panneau (100) a une paire de côtés parallèles pour l'assemblage de formes complémentaires le long d'une ligne d'assemblage et une paire de côtés parallèles orientés transversalement à la première paire de dités réalisant l'assemblage par imbrication de formes complémentaires par enclipsage d'un côté avec le côté homologue d'un panneau déjà posé dans cette même rangée de pose. L'enclipsage se fait par le mouvement du panneau en cours de pose. Cette paire de côtés transversaux parallèles (1, 2), a des moyens d'assemblage par la forme, complétés sur un côté par une languette (appelée verrou) et dans l'autre côté, une cavité de verrouillage recevant la languette par enclipsage et réalisant le verrouillage des mouvements perpendiculaires au plan du panneau et donc du plan de pose.

Ainsi les deux bords ou côtés transversaux (1, 2) d'un même panneau ont des formes complémentaires, c'est-à-dire des formes destinées à être assemblées aux formes complémentaires du côté homologue d'un autre panneau (100).

De façon plus détaillée, le premier c&té 1 se compose d'un relief formant un crochet (11) précédé d'une cavité d'assemblage (12) (première cavité) se terminant vers le dessus par une cavité de verrouillage (13) et d'un nez (14) arrivant dans le plan de jonction (PJ).

Le deuxième côté (2) a globalement une section de forme complémentaire de celle du premier côté avec aussi une sorte de crochet formant une avancée (21) munie d'un verrou (3). Plus précisément, le dessus (100) du panneau près du second côté (2) se prolonge au-delà du dessous (dos du panneau) (102) par un crochet retourné formant l'avancée (21) au-delà d'une deuxième cavité d'assemblage (22). L'avancée (21) a globalement une section complémentaire de celle de la première cavité d'assemblage (12); le crochet (11) et la deuxième cavité d'assemblage (22) ont précisément la même section complémentaire.

Le bord de l'avancée (21) forme la surface de jonction avec le nez (14) surmontant la cavité de verrouillage (13) de l'autre panneau plan de jonction (PJ). L'avancée se compose d'un bec (24) dans le plan de jonction au-dessus d'un dégagement (23) se poursuivant vers le dessous (102), par une languette de verrouillage appelée plus simplement verrou (3) rejoignant l'avancée (21). Le dégagement (23) a un fond (231).

Le nez (14) et le bec (24) ont leur surface d'appui non référencée venant dans un plan de jonction (PJ). Leur intersection avec le dessus (101) peut se faire avec un chanfrein non représenté.

La figure 2 montre en section deux panneaux (100, 100a) réalisés se-lon le procédé de l'invention et réunis par les côtés complémentaires enclipsés. Pour faciliter la description, le deuxième panneau et ses parlies portent les mêmes références numériques que les éléments identiques du premier panneau (100) complétées par le suffixe (a). Le premier panneau (100) est par convention le panneau déjà posé et l'autre panneau (100a) a été mis en place ensuite selon l'ordre chronologique des étapes de pose des panneaux dans la même rangée de panneaux. La réunion des profils des côtés (1, 2a) des deux panneaux 1(00, 100a) se fait au passage du nez (14) par l'écrasement élastique du verrou (3a) en partie dans le dégagement (23) ; puis le verrou (3a) revient élastiquement et s'arcboute contre le côtésupérieur (131) de la cavité de verrouillage (13), ce qui bloque le panneau (100a) et l'empéche de se soulever par rapport au panneau 100 dans le plan de jonction (PJ).

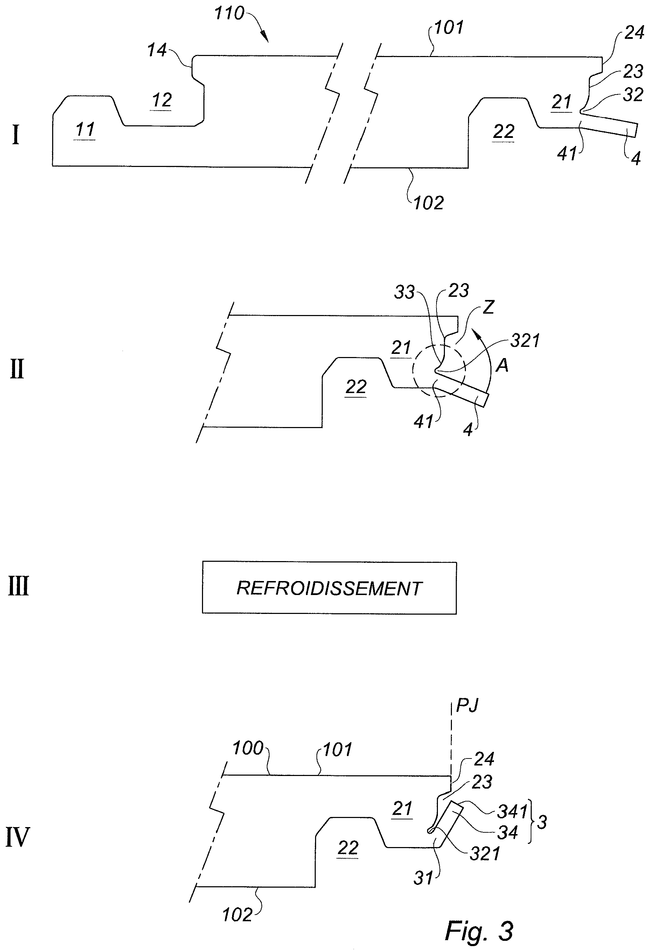

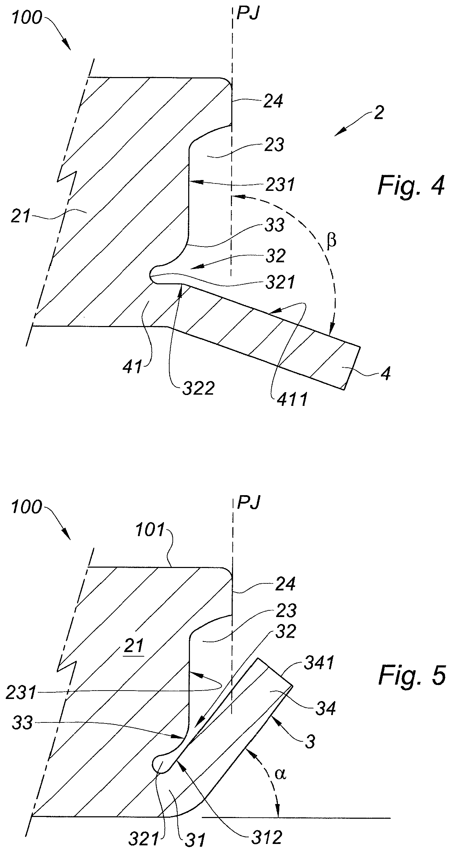

Un exemple de réalisation du procédé de fabrication de tels panneaux sera décrit ci-après. Dans des étapes préliminaires, on découpe une plaque de matière plastique en ébauches de panneau, en général de forme rectangulaire ayant deux paires de dités parallèles. On usine par fraisage la première paire de côtés. L'autre paire de côtés, celle des côtés transversaux, sera réalisée selon le procédé de l'invention décrit ci-après à l'aide de la figure 3. Le détail de la forme des côtés transversaux et leur mise en ceuvre seront décrits à l'aide des figures 4, 5 et 6.

Selon la figure 3 qui limite la présentation du panneau (100) á la section du deuxième côté (2) muni du verrou (3), le procédé de réalisation d'un panneau (100) consiste dans une première phase (I) á usiner par fraisage l'ébauche de panneau (110) avec la section provisoire représentée, pour le second côté (2), le premier côté 1 usiné par fraisage ayant sa section définitive représentée á la figure 1.

Selon la section de l'ébauche (110) usinée par fraisage, le deuxième côté (2), dans sa forme provisoire, se compose de l'avancée (21) et de la deuxième cavité d'assemblage (22). La face de l'avancée (21) se compose du bec (24) en saillie, venant dans le plan de jonction (PJ) puis le dégagement en retrait (23), selon une profondeur (dans la direction du plan du dessin) au moins egale á l'épaisseur du futur verrou (3) non encore mis en forme dans cet état du profilé en sortie d'usinage. Le dégagement (23) se poursuit par un appui courbe convexe (33) rejoignant une gorge (32) avec un fond (321) arrondi et ensuite une languette (4). Celle-ci est de préférence inclinée vers le bas ou dans le prolongement de l'avancée (21) pour former la gorge (32) ouverte reliée au fond (231) du dégagement (23) par l'appui courbe, convexe (33) (voir aussi la figure 4). Cette ouverture de l'angle formé par la lamelle (4) permet le fraisage du fond (321) et présente un avantage mécanique de fonctionnement pour le verrouillage comme cela sera décrit ultérieurement.

La phase (II) suivante consiste á réchauffer localement l'ébauche (110) dans la zone Z entourée d'un cercle, pour ramollir la matière de cette zone de jonction á la base (41) de la languette (4). Le chauffage local peut se faire par différents moyens permettant de se limiter á la zone nécessaire á la mise en forme, par exemple le chauffage par rayonnement infrarouge, le chauffage par contact avec un patin chauffant, le chauffage par un jet d'air chaud ou encore par un faisceau laser. L'élévation de température est celle du début de ramollissement de la matière plastique (température de la transition vitreuse).

Dans cette phase (II), le réchauffement est limité localement á la zone de jonction (Z) grâce au rapport des masses de matière entre la masse de la base (41) de la languette (4) et celle de l'avancée (21). Le réchauf-fement local ne déstabilise pas la forme de l'avancée (21), ni celle de l'appui convexe (32) ni celle du contour du dégagement (23) ni celle de la languette au-derá de sa base (41).

Une fois la base (41) réchauffée á la température de début de ramol-lissement, en fonction de la composition de la matière de cette zone, on relève mécaniquement la languette (4) selon la flèche (A) pour une déformation permanente de sa base (41), pour incliner la languette (4) vers le haut, c'est-à-dire vers le dessus (101) et former le verrou élastique (3) en laissant son extrémité libre (34) dépasser du plan de jonction (PJ).

Ce relevage par pivotement de la languette (4) autour de sa base (41) et au-delà du fond (32) de la gorge (32) peut se faire par différents moyens mécaniques non détaillés tels que :
- une lame s'appuyant contre le dessous de la languette (4) et la faisant pivoter jusqu'à la position á obtenir,
- une roulette relevant progressivement la languette (4) dans la direction perpendiculaire au plan de la section représentée á la figure (3),
- le passage du profilé (200) sur une rampe ou une roulette, fixes, pour faire pivoter progressivement la languette (4) de sa position de la phase II à celle relevée de la phase III, qui est l'état de la languette constituant alors le verrou (3).

Le post-formage est suivi du refroidissement (III) de la zone de j onction (Z) pour stabiliser cette forme de la base (31) du verrou (3).

Après cette stabilisation, on obtient le côté post-formé dont la section est celle de la figure 5 avec la base (41) de la languette (4) post-formée devenue le verrou (3) tenu par sa base (31).

Les figures 4 et 5 montrent á échelle agrandie, la forme de la section du deuxième côté de l'ébauche de panneau (110) en sortie d'usinage et celle de l'état final du côté du panneau après stabilisation de son postformage.

La section de la figure 4 met en évidence la forme du coté usiné par fraisage montrant l'appui convexe (33) à l'extrémité du fond (231) du dégagement (23) et la section en V de la gorge (32) séparant l'appui convexe (33) et le côté adjacent (322) de la gorge (32) au niveau de la base (41) de la languette (4) ainsi que le contour arrondi du fond (321) de la gorge (32). Dans cet exemple de réalisation, la languette (4) fait avec le plan de jonction (PJ), angle (b) supérieur à 90° à la fois intéressant pour l'usinage par fraisage et pour favoriser l'effet de rappel élastique de la future base (31) du verrou (3).

La séparation nette des surfaces en regard en sortie d'usinage, celle de l'appui convexe (33) et celle du côté de la base de la languette (4) devenu, coté (322) de la gorge (32), apparait clairement à la figure 5.

La figure 5 met en évidence la gorge (32) et son fond arrondi (321) distinct de l'appui bombé (33) de sorte que le la déformation élastique du verrou (3) pour l'enclipsage du verrou, fait fléchir élastiquement le verrou (3) l'appliquant localement contre cet appui (33). Ce mouvement bénéficie de l'élasticité pour enclipser le verrou dans la cavité (13) et venir contre son côté supérieur (131) par sa face d'appui (341) de son extrémité (34).

Ce mouvement de déformation élastique du verrou (3) ne fatigue pas le fond (321) de la gorge (32) et lui permet de bénéficier du bras de levier entre le contact avec l'appui (33) et le fond (321). La position verrouillée ne crée pas non plus d'amorce de rupture car le verrou (3), en appui contre le côté (131) de l'autre panneau et subissant des alternances de poussées/compressions lorsque l'on marche sur le panneau 100 posé, ne risque pas de fatiguer et de se rompre à sa base (31).

Cette géométrie de la base (31) est une caractéristique importante pour la fonction du verrou (3).

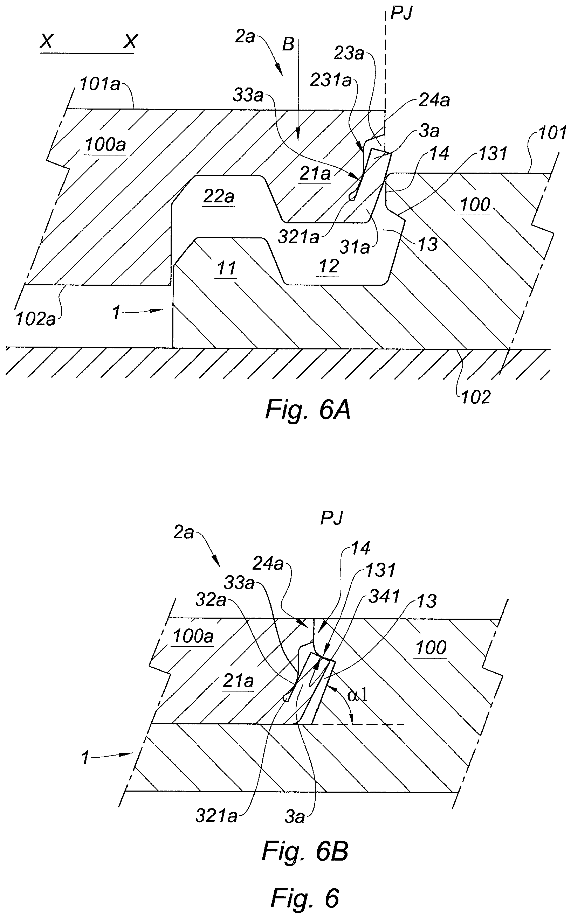

Les figures 6A, 6B montrent le mouvement d'enclipsage du verrou (3) par le rabattement du panneau (100a) par rapport à un panneau (100) déjà posé mettant en évidence les impératifs de précision que doivent respecter les formes stables des côtés du panneau réalisés selon le procédé de l'invention.

On peut supposer que les panneaux (100a, 100) s'assemblent par le pivotement autour de leur(s) côté(s), parallèle(s) (direction XX) au plan des figures 6A, 6B selon les mouvements de pivotement/engagement connus. Pour cette opération d'assemblage, une rangée de panneaux est déjà assemblée dans la direction XX (ligne d'assemblage) et la rangée suivante est amorcée par le panneau (100) déjà posé et assemblé à des panneaux de la ligne précédente.

La pose du nouveau panneau 100a consiste à engager son côté (orientation de la direction XX parallèle au plan de la feuille du dessin) dans le bord d'assemblage des panneaux de la ligne précédente (première ligne) et de le rabattre par pivotement pour engager par cette opération, non seulement son côté déjà en liaison avec le côté correspondant du ou des panneau(x) de la rangée de panneaux déjà posés (première ligne) mais aussi engager son côté (2a) dans le premier côté (1) du panneau (100) déjà posé dans la seconde rangée. Cet engagement par pivotement est représenté aux figures 6A, 6B par la flèche B.

La figure 6A montre le début du pivotement lorsque le verrou (3a) du côté (2a) rencontre progressivement le nez (14) du premier côté (1) du panneau (100) posé, en s'escamotant élastiquement dans le dégagement (23).

Au cours de ce pivotement, on a un engagement progressif des formes complémentaires commencant près de l'axe de basculement (direction XX, derrière la feuille de dessin) et progressant vers l'avant si bien que dès le début du mouvement de pivotement, une partie de la seconde cavité (22a) du panneau (100a) est suffisamment maintenue par l'engagement du crochet (11) du panneau (100) déjà posé dans cette deuxième ligne pour exclure tout glissement du panneau (100a) dans la direction (XX). Le verrou (3a) est ainsi obligé de se courber progressivement en fléchissant élastiquement contre l'appui courbe (33a) en retrait du plan de jonction (PJ) pour passer sur la face du bec (14) puis laisser l'extrémité (34a) du verrou (3a) se détendre élastiquement dans la cavité de verrouillage (13) jusqu'à la position finale de verrouillage représentée à la figure 6B. Le verrou (3a) est alors arcbouté contre le côté supérieur (131) de la cavité de verrouillage (13) du panneau (100) par sa face d'appui (341a). Le verrou (3) est en appui élastique contre l'appui courbe (33a), ce qui garantit l'accrochage même contre les mouvements d'enfoncement de la lame (100) par rapport à la lame (100a) sous l'effet du poids d'une personne appuyée sur la lame (100) et non sur la lame (100a).

Dans cette position, l'angle (a1) du verrou (3a) est supérieur à l'angle (a) avant l'engagement, ce qui créée cette poussée de maintien du verrou (3a) en appui de blocage.

En résumé, le procédé de mise en forme du bord d'assemblage du panneau permet d'obtenir un panneau ayant des caractéristiques particulières de forme pour un assemblage rapide et précis des panneaux.

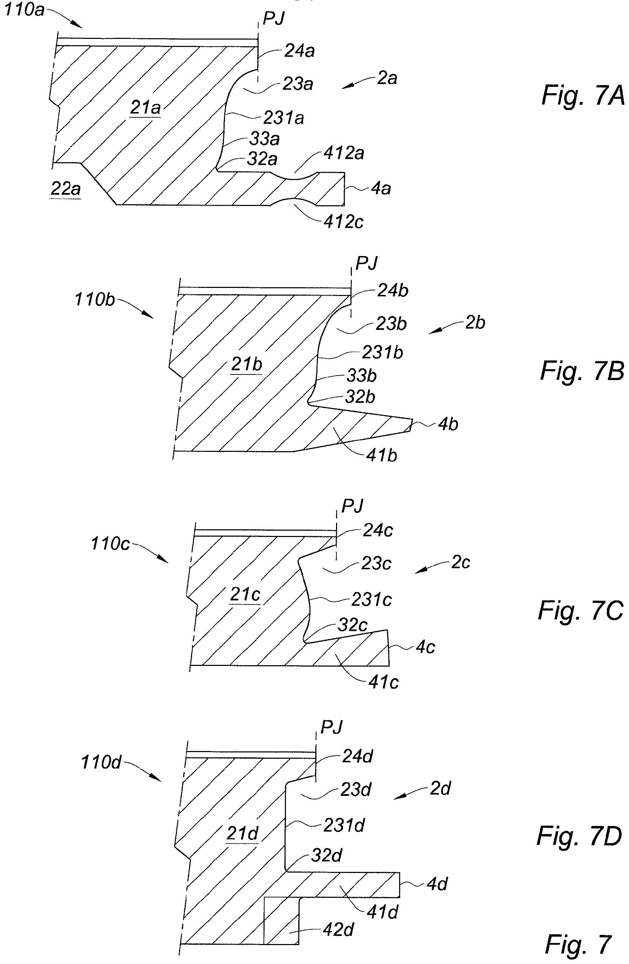

[La figure 7] montre dans ses parties (7a-7d) différentes formes de lamelles (4a, -4d) pour obtenir le verrou (3) lui même non représenté. Les verrous (3) non représentés ont différentes caractéristiques mécaniques en fonction des caractéristiques particulières de la matière utilisé pour la lame (100). Cette description utilise les mêmes références numériques que ci-dessus avec des suffixes alphabétiques différents pour désigner les éléments globalement analogues à ceux déjà décrits.

Toutes les figures se limitent à représenter l'extrémité du deuxième côté transversale (2a, -d) dans sa forme usinée mais non encore définitive comme elle le sera après le thermoformage localisé consistant à relever la languette (4a-4d) et à figer cette forme par refroidissement.

Selon la figure 7a, l'ébauche usinée (110a) se compose de l'avancée (21a) et de la deuxième cavité d'assemblage (22a), simplement esquissé.

La face de l'avancée (21a) se compose d'un bec (24a) en saillie venant dans le plan de jonction (PJ) puis le dégagement en retrait (23a) dont le fond (231a) se poursuit par un appui courbe, convexe (33a) rejoignant par une gorge (32a) à fond arrondi, et une languette (4a) dans le prolongement de l'avancée (21a).

Sur ses deux faces, au-delà de sa base (41a), la languette (4a) présente une réduction d'épaisseur (412a) pour augmenter la souplesse du futur verrou. Cette variante est avantageuse pour des lames réalisées dans des matériaux très rigides.

La figure 7b] montre une autre variante d'ébauche usinée (110b) dont la représentation se limite à la seule avancée (21b). Celle-ci se limite au seul crochet retourné (2 1 b) se composant de l'avancée du bec (24b) arrivant dans le plan de jonction (PJ) et se poursuivant par le dé-gagement (23b) en retrait du plan de jonction ainsi que par un appui courbe, convexe (33b) jusqu'à la gorge (32b) á la base (41b) de la languette (4b). La base (41b) de la languette (4b) est agrandie par rapport au restant de la languette (4b) allant diminuant jusqu'à son extrémité.

Cette forme de languette (4b) qui donnera le verrou est avantageuse pour des lames en des matériaux de faible densité ou souples.

[La figure 7c] montre une autre variante d'ébauche usinée (110c) dont la représentation se limite là encore au seul crochet (21c). Ce crochet se compose de l'avancée (24c) arrivant dans le plan de jonction (PJ) et se poursuivant par le dégagement (23c) en retrait dans le plan de jonction (PJ) ainsi que par un appui courbe, convexe (33c) arrivant á la gorge (32c) á la base (41c) de la languette (4c). La base (41c) est rétrécie par rapport au restant de la languette (4c) allant en augmentant jusqu'à son extrémité.

Cette forme de languette (4c) qui donnera le verrou est avantageuse pour des lames en des matériaux très rigides, difficile á plier.

[La figure 4d] montre une autre variante d'ébauche usinée (110d) dont la représentation se limite au crochet retourné (21d) qui se compose de l'avancée (24d) arrivant dans le plan de jonction (PJ) et se poursuivant par le dégagement (23d) en retrait dans le plan de j onction.

Le fond (231d) plat arrive á la gorge (32d) á la base (41d) la languette (4d).

La base (41d) a une assise (42d) pour augmenter la résistance aux efforts verticaux s'exercant sur le verrou réalisé par thermoformage local de la languette (4d).

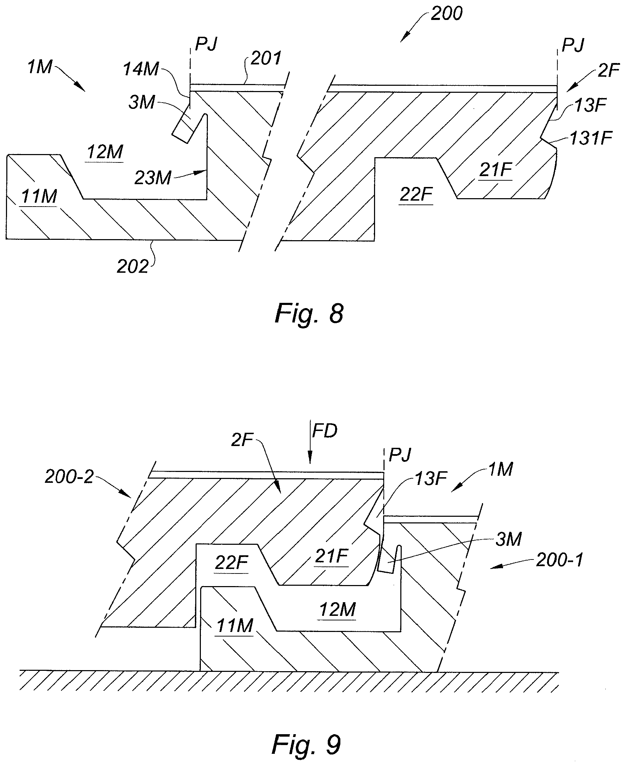

[Les figures 8, 9, 10] montrent un autre mode de réalisation d'un panneau (200) selon l'invention, conservant la structure de base des côtés transversaux (1, 2) mais inversant leur système de verrouillage, le verrou étant réalisé sur 1e côté transversal (a) et son logement formant en quelque sorte la gâche est réalisé sur le côté transversal (2).

Ainsi pour désigner les éléments inversés, mâle (M)/femelle (F) des côtés, leurs références (1, 2) seront complétés par les suffixes (M) et (F).

Le côté (1) qui précédemment était un côtéfemelle dans le mode de réalisation précédent est muni du verrou (3M) et du dégagement (23M) alors que le côté transversal (2) qui était le côtémále, est muni de la cavité de verrouillage (13F) et de son côté d'appui (131F).

Il est á remarquer que le verrou (3M) est obtenu á partir d'une languette (4) qui est du type de la languette (4d) (figure 7d) pour avoir une assise forte. Elle constitue le nez (14M) (figure 8) qui reste dans le plan de jonction (PJ) de cette extrémité (1M) et ne présente pas d'arrondi de la base mise en forme comme la partie (31a) de la figure 6A puisque le nez (14M) arrive jusqu'au dessus (201) du panneau (200). Le dessous du panneau (200) porte la référence (202).

Les autres parties identiques á celles des côtés (1, 2) des modes de réalisations précédents portent les mêmes références numériques simplement complétées par le suffixe (M) ou le suffixe (F).

Ainsi le côté (1M) a un crochet (11M) et une cavité de verrouillage (12M) alors que le côté (2F) a un crochet retourné (21F) et une cavité d'assemblage (22F).

[La figure 9] montre schématiquement l'enclipsage de deux panneaux par leurs côtés transversaux (petits côtés).

Le panneau (200-1) est le panneau posé dont le côté (1M) reçoit le côté (2F) du panneau (200-2) qui descend comme le suggère la flèche (FD).

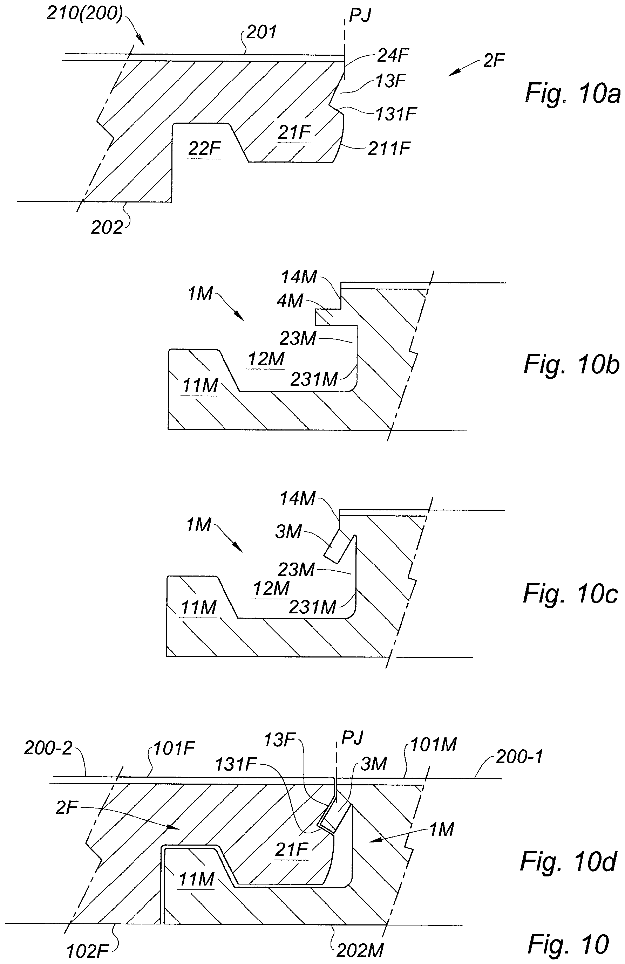

Le résultat de l'enclipsage est représenté á la figure 10d.

[Les figures 10a-10d] montrent les principales phases de réalisation et d'assemblage des côtés transversaux (2F, 1M) du panneau (200).

Le côté transversal (2F) se réalise par l'usinage du bec (24F) formant le plan de jonction (PJ) et de la cavité de verrouillage (13F) avec son côtéd'appui (131F) pour le verrou (3M). Ensuite il y a la surface de guidage (211F) du crochet retourné (21F).

Les usinages se font en plus de l'usinage de la cavité (22F) et des autres côtés du crochet (21F).

Le premier côté transversal (1M) est usiné selon le profil représenté á la figure 10b. Cette forme est accessible aux outils d'usinage continu/par défilement, tels que des fraises. On usine ainsi la languette (4M) laissant une surface (16M) au dessus d'elle qui correspond au nez (14) du mode de réalisation de la figure 1. Puis par thermoformage localisé appliqué á la base de la languette (4M) on replie la languette dont la base a été ramollie, en direction du fond (231M) du dégagement (23M) et on fixe cet état replié, par refroidissement de la zone de thermoformage. On obtient ainsi le verrou (3M).

[La figure 10d] montre l'état assemblé/encliqueté des deux côtés transversaux (1M/2F).

### NOMENCLATURE DES ELEMENTS PRINCIPAUX

100, 200 Panneau
110, 210 Ebauche de panneau
100a Autre panneau
101,201 Dessus du panneau
102, 202 Dessous du panneau/dos du panneau
1, 1M Premier dité transversal
   11, 11M Crochet
   12,12M Cavité d'assemblage/première cavité
   13, 13F Cavité de verrouillage
      131F Côté supérieur
      14 Nez
2,2F Deuxième côté transversal
   21, 21a-d, 21F Crochet retourné/avancée
   211F Surface de guidage
   22,22F Cavité d'assemblage/deuxième cavité
   23,23M Dégagement
      231, 231M, 231a-d Fond du dégagement
   24, 2 4 F B e c
3, 3M Verrou
   31 Base mise en forme
   32, 32a-d Gorge
      321 Fond arrondi de la gorge
      322 C6té du verrou
   33 Appui courbe convexe
   34 Extrémité libre
      341 Face d'appui
   4, 4a-d, 4M Languette
      41, 41a-d Base de la languette
      411 Côté de la languette
      42d Assise
PJ Plan de jonction
FD Direction d'enclipsage

## Revendications

1. Procédé de fabrication d'un panneau de revêtement en matière plastique, à deux paires de côtés parallèles, pour être assemblé par ses paires de côtés à d'autres panneaux de même type dont les paires de côtés ont des profils d'assemblage complémentaires, un dessus et un dessous, les côtés des panneaux étant assemblés selon des plans de jonction (PJ),
chaque panneau (100) ayant :
une paire de côtés pour l'assemblage par le pivotement du côté d'un panneau dans le côté homologue d'un autre panneau déjà posé, et
une autre paire de côtés transversaux (1, 2) pour l'assemblage par imbrication de formes et enclipsage par ce mouvement, dans le côté transversal homologue d'un autre panneau déjà posé,
un premier côté transversal (1) ayant un plan de jonction (PJ) au bord du dessus (110) du panneau se poursuit par une cavité de verrouillage (12) débouchant vers le dessus (101) et par un crochet (11),
le second côté transversal (2), homologue au premier côté (1) ayant un bord supérieur dans le plan de jonction (PJ) terminant une avancée (21) et séparée du corps du panneau par une cavité d'assemblage (22) d'un panneau coiffant le crochet (11) d'un autre panneau et l'avancée (21) se logeant dans la cavité (12) de cet autre panneau,
procédé **caractérisé en ce que**
- on forme (I) l'ébauche (110) de la paire de côtés (1,2) transversaux en donnant au premier côté (1) sa section définitive et en réalisant sur le second côté (2), une cavité d'assemblage (22) débouchant dans le dessous (102) du profilé et une avancée (21) munie d'un bec (24) arrivant dans le plan de jonction (PJ) et suivie d'un dégagement (23) en retrait du plan de jonction (PJ) et dont le fond (231) se prolonge par une languette (4) en saillie de la base (41) de l'avancée (21),
- on chauffe localement (II) la zone (Z) de la base (41) de la languette (4),
- puis lorsque cette zone (Z) est ramollie, on relève (III) la languette (4) en direction du dégagement (23) pour former le verrou (3), et
- on stabilise la forme en la refroidissant (IV) pour obtenir le panneau dont les deux côtés transversaux (1, 2) ont leur forme définitive.

2. Procédé de fabrication d'un panneau de revêtement en matière plastique selon la revendication 1, procédé **caractérisé en ce qu'**
- on forme l'ébauche de la paire de côtés transversaux en usinant le premier côté (1) á sa section définitive et en usinant, on forme sur le second côté (2), une cavité d'assemblage (22) débouchant dans le dessous (102) du profilé et une avancée (21) munie du bec (24) et suivie d'un dégagement (23) en retrait du plan de jonction (PJ) et dont le fond (231) se poursuit par un appui courbe convexe (33) qui rejoint une amorce de gorge (32) et se prolonge par la languette (4) en saillie de la base (41) de l'avancée (21).

3. Procédé de fabrication d'un panneau de revêtement en matière plastique selon la revendication 2,**caractérisé en ce que** on usine au moins l'un des côtés par fraisage.

4. Procédé de fabrication d'un panneau de revêtement en matière plastique selon la revendication 1, **caractérisé en ce qu'**on forme (I) une gorge arrondie (321) reliant l'appui courbe (33) et le côté (411) de la base (41) de la languette (4).

5. Procédé de fabrication d'un panneau de revêtement en matière plastique selon la revendication 1, **caractérisé en ce qu'**on forme (I) la languette (4) avec une inclinaison d'angle (β) par rapport au plan de jonction (PJ) du panneau qui est supérieur á 90°.

6. Procédé de fabrication d'un panneau de revêtement en matière plastique comportant deux paires de côtés parallèles, pour être assemblé á d'autres panneaux de même type dont les paires de côtés ont des profils d'assemblage homologues, le panneau (100) ayant :
- une paire de côtés, pour l'assemblage par le pivotement du côté d'un panneau dans le côté homologue d'un autre panneau déjà posé, et
- une paire de côtés transversaux (1,2), pour l'assemblage par imbrication de formes et enclipsage par ce mouvement, dans le côté transversal homologue d'un autre panneau déjà posé,
- le premier côté (1) de cette paire de côtés comportant un crochet (11) et une première cavité d'assemblage (12),
* débouchant dans le dessus (101) du panneau (100),
* traversée par le plan de jonction (PJ) des deux côtés (1, 2), et ayant
* une cavité de verrouillage (13) en retrait du plan de jonction (PJ) et dont le côté supérieur (131) forme une surface d'appui,
- le deuxième côté (2) de cette paire de côtés ayant une deuxième cavité d'assemblage (22) débouchant dans le dessous (102) du panneau pour recevoir le premier crochet (11) du panneau adjacent, et un crochet retourné formant une avancée (21) pour venir dans la première cavité d'assemblage (12) du premier côté de ce panneau adjacent,
* la face de l'avancée (21) comportant un bec (24) dont la surface d'appui est dans le plan de jonction (PJ) pour atteindre le dessus (101) du panneau,
* un dégagement (23) en retrait du plan de jonction (PJ) se poursuivant vers le dessous (102) par un verrou (3), souple, en forme de languette inclinée, orientée vers le dessus (101) et dont la base (41) est issue de l'avancée (21),
procédé **caractérisé en ce que**
- on usine par fraisage la section de l'ébauche de la paire de côtés transversaux (1,2) en donnant au premier côté (1) sa section définitive et par usinage par fraisage, on forme sur le second côté (2), une cavité d'assemblage (22) débouchant dans le dessous (102) du profilé et une avancée (21) munie d'un bec (24) et suivie d'un dégagement (23) en retrait du plan de jonction (PJ) et dont le fond (231) rejoint une amorce de gorge (32) et se prolonge par une languette (4) en saillie de la base (41) de l'avancée (21),
- on chauffe localement (II) la zone (Z) de la base (41) de la languette (4),
- puis lorsque cette zone (Z) est ramollie, on relève (III) la languette (4) en direction du dégagement (23) pour former le verrou (3), et
- on stabilise la forme en la refroidissant (IV) pour obtenir la forme définitive des deux côtés (1, 2) transversaux du panneau.

## Patentansprüche

1. Verfahren zur Herstellung einer Verkleidungsplatte aus Kunststoff mit zwei Paaren paralleler Seiten, die an ihren Seitenpaaren mit anderen Platten desselben Typs verbunden werden soll, deren Seitenpaare komplementäre Verbindungsprofile aufweisen, einer Oberseite und einer Unterseite, wobei die Plattenseiten entlang von Verbindungsebenen (PJ) verbunden werden,
wobei jede Platte (100) Folgendes aufweist:
ein Seitenpaar zur Verbindung durch das Einschwenken der Seite einer Platte in die entsprechende Seite einer anderen bereits verlegten Platte und
ein weiteres Querseitenpaar (1, 2) zur Verbindung durch formschlüssiges Einsetzen und, durch diese Bewegung, Einschnappen in die entsprechende Querseite einer anderen bereits verlegten Platte,
wobei eine erste Querseite (1), die eine Verbindungsebene (PJ) an der Kante der Oberseite (110) der Platte aufweist, in einen Verriegelungshohlraum (12), der sich zur Oberseite (101) hin öffnet, und einen Haken (11) übergeht,
wobei die zweite Querseite (2), die das Gegenstück zur ersten Seite (1) bildet und eine obere Kante in der Verbindungsebene (PJ) aufweist, einen Vorsprung (21) abschließt, der vom Körper der Platte durch einen Verbindungshohlraum (22) einer Platte getrennt ist, die den Haken (11) einer anderen Platte überdeckt, und wobei sich der Vorsprung (21) in den Hohlraum (12) dieser anderen Platte einfügt,
wobei das Verfahren **dadurch gekennzeichnet ist, dass**
- der Rohling (110) des Querseitenpaars (1, 2) ausgebildet wird (I), indem der ersten Seite (1) ihr endgültiger Querschnitt verliehen wird und indem auf der zweiten Seite (2) ein Verbindungshohlraum (22) ausgeführt wird, der sich zur Unterseite (102) des Profils hin öffnet, und ein Vorsprung (21), der mit einer Nase (24) versehen ist, die in die Verbindungsebene (PJ) reicht und der eine von der Verbindungsebene (PJ) zurückgesetzte Aussparung (23) folgt, deren Boden (231) durch eine Zunge (4) verlängert wird, die von der Basis (41) des Vorsprungs (21) vorsteht,
- der Bereich (Z) der Basis (41) der Zunge (4) lokal erhitzt wird (II),
- anschließend, wenn dieser Bereich (Z) weich ist, die Zunge (4) in Richtung der Aussparung (23) angehoben wird (III), um den Riegel (3) auszubilden, und
- die Form durch Abkühlen stabilisiert wird (IV), um die Platte zu erhalten, deren beide Querseiten (1, 2) ihre endgültige Form aufweisen.

2. Verfahren zur Herstellung einer Verkleidungsplatte aus Kunststoff nach Anspruch 1, wobei das Verfahren **dadurch gekennzeichnet ist, dass**
- der Rohling des Querseitenpaars ausgebildet wird, indem die erste Seite (1) auf ihren endgültigen Querschnitt bearbeitet wird und durch Bearbeitung auf der zweiten Seite (2) ein Verbindungshohlraum (22) ausgebildet wird, der sich zur Unterseite (102) des Profils hin öffnet, und ein Vorsprung (21), der mit der Nase (24) versehen ist und auf den eine von der Verbindungsebene (PJ) zurückgesetzte Aussparung (23) folgt, deren Boden (231) in eine konvex gekrümmte Auflage (33) übergeht, an die sich ein Kehlenansatz (32) anschließt und die durch die Zunge (4) verlängert wird, die von der Basis (41) des Vorsprungs (21) vorsteht.

3. Verfahren zur Herstellung einer Verkleidungsplatte aus Kunststoff nach Anspruch 2, **dadurch gekennzeichnet, dass** mindestens eine der Seiten durch Fräsen bearbeitet wird.

4. Verfahren zur Herstellung einer Verkleidungsplatte aus Kunststoff nach Anspruch 1, **dadurch gekennzeichnet, dass** eine abgerundete Kehle (321) ausgebildet wird, die die gekrümmte Auflage (33) und die Seite (411) der Basis (41) der Zunge (4) verbindet.

5. Verfahren zur Herstellung einer Verkleidungsplatte aus Kunststoff nach Anspruch 1, **dadurch gekennzeichnet, dass** die Zunge (4) mit einer Neigung mit einem Winkel (β) in Bezug auf die Verbindungsebene (PJ) der Platte ausgebildet wird (I), der größer als 90° ist.

6. Verfahren zur Herstellung einer Verkleidungsplatte aus Kunststoff mit zwei Paaren paralleler Seiten zum Zusammenbau mit anderen Platten desselben Typs, deren Seitenpaare entsprechende Verbindungsprofile aufweisen, wobei die Platte (100) Folgendes aufweist:
- ein Seitenpaar zur Verbindung durch das Einschwenken der Seite einer Platte in die entsprechende Seite einer anderen bereits verlegten Platte und
- ein Querseitenpaar (1, 2) zur Verbindung durch formschlüssiges Einsetzen und, durch diese Bewegung, Einschnappen in die entsprechende Querseite einer anderen bereits verlegten Platte,
- wobei die erste Seite (1) dieses Seitenpaars einen Haken (11) und einen ersten Verbindungshohlraum (12) aufweist,
* der sich zur Oberseite (101) der Platte (100) hin öffnet,
* den die Verbindungsebene (PJ) der beiden Seiten (1, 2) durchquert und
* der einen von der Verbindungsebene (PJ) zurückgesetzten Verriegelungshohlraum (13) aufweist, dessen obere Seite (131) eine Anlagefläche ausbildet,
- wobei die zweite Seite (2) dieses Seitenpaars einen zweiten Verbindungshohlraum (22) aufweist, der sich zur Unterseite (102) der Platte hin öffnet, um den ersten Haken (11) der benachbarten Platte aufzunehmen, und einen umgestülpten Haken, der einen Vorsprung (21) ausbildet, der in den ersten Verbindungshohlraum (12) der ersten Seite dieser benachbarten Platte gelangen soll,
* wobei die Vorderseite des Vorsprungs (21) eine Nase (24) aufweist, deren Anlagefläche in der Verbindungsebene (PJ) liegt, um die Oberseite (101) der Platte zu erreichen,
* wobei eine von der Verbindungsebene (PJ) zurückgesetzte Aussparung (23) zur Unterseite (102) hin in einen flexiblen, zungenförmigen Riegel (3) übergeht, der zur Oberseite (101) hin ausgerichtet ist und dessen Basis (41) aus dem Vorsprung (21) hervorgeht,
wobei das Verfahren **dadurch gekennzeichnet ist, dass**
- der Querschnitt des Rohlings des Querseitenpaars (1, 2) durch Fräsen hergestellt wird, wobei die erste Seite (1) ihren endgültige Querschnitt erhält, und durch Fräsbearbeitung auf der zweiten Seite (2) ein Verbindungshohlraum (22) ausgebildet wird, der sich zur Unterseite (102) des Profils hin öffnet, und ein Vorsprung (21), der mit einer Nase (24) versehen ist und auf den eine von der Verbindungsebene (PJ) zurückgesetzte Aussparung (23) folgt, an deren Boden (231) sich an ein Kehlenansatz (32) anschließt und die durch eine Zunge (4) verlängert wird, die von der Basis (41) des Vorsprungs (21) vorsteht,
- der Bereich (Z) der Basis (41) der Zunge (4) lokal erhitzt wird (II),
- anschließend, wenn dieser Bereich (Z) weich ist, die Zunge (4) in Richtung der Aussparung (23) angehoben wird (III), um den Riegel (3) auszubilden, und
- die Form durch Abkühlen (IV) stabilisiert wird, um die endgültige Form der beiden Querseiten (1, 2) der Platte zu erhalten.

## Claims

1. Method for manufacturing a covering panel made of plastic, having two pairs of parallel sides, to be assembled by its pairs of sides to other panels of the same type whose pairs of sides have complementary assembly profiles, a top and a bottom, the sides of the panels being assembled along junction planes (PJ),
each panel (100) having:
one pair of sides for assembly by pivoting the side of one panel into the homologous side of another already placed panel, and
another pair of transverse sides (1, 2) for assembly by nesting of shapes and clip-fastening by this movement into the homologous transverse side of another already placed panel,
a first transverse side (1) having a junction plane (PJ) at the edge of the top (110) of the panel is extended by a locking cavity (12) opening towards the top (101) and by a hook (11),
the second transverse side (12), which is homologous to the first side (1), having an upper edge in the junction plane (PJ) terminating a projection (21) and separated from the body of the panel by an assembly cavity (22) of one panel covering the hook (11) of another panel and the projection (21) being housed in the cavity (12) of this other panel,
which method is **characterized in that**
- the blank (110) of the pair of transverse sides (1, 2) is formed (I) by giving the first side (1) its final cross section and by producing, on the second side (2), an assembly cavity (22) opening into the bottom (102) of the profile and a projection (21) provided with a tip (24) arriving in the junction plane (PJ) and followed by a clearance (23) set back from the junction plane (PJ) and whose bottom wall (231) is extended by a tab (4) projecting from the base (41) of the projection (21),
- the zone (Z) of the base (41) of the tab (4) is heated locally (II),
- then, when this zone (Z) is softened, the tab (4) is lifted (III) in the direction of the clearance (23) to form the latch (3), and
- the shape is stabilized by cooling it (IV) to obtain the panel whose two transverse sides (1, 2) have their final shape.

2. Method for manufacturing a covering panel made of plastic according to Claim 1, which method is **characterized in that**
- the blank of the pair of transverse sides is formed by machining the first side (1) to its final cross section and, by machining, there is formed on the second side (2) an assembly cavity (22) opening into the bottom (102) of the profile and a projection (21) provided with the tip (24) and followed by a clearance (23) set back from the junction plane (PJ) and whose bottom wall (231) is extended by a convex curved support (33) which joins an incipient groove (32) and is extended by the tab (4) projecting from the base (41) of the projection (21).

3. Method for manufacturing a covering panel made of plastic according to Claim 2, **characterized in that** at least one of the sides is machined by milling.

4. Method for manufacturing a covering panel made of plastic according to Claim 1, **characterized in that** a rounded groove (321) connecting the curved support (33) and the side (411) of the base (41) of the tab (4) is formed (I).

5. Method for manufacturing a covering panel made of plastic according to Claim 1, **characterized in that** the tab (4) is formed (I) with an inclination of angle (β) with respect to the junction plane (PJ) of the panel that is greater than 90°.

6. Method for manufacturing a covering panel made of plastic comprising two pairs of parallel sides to be assembled to other panels of the same type whose pairs of sides have homologous assembly profiles, the panel (100) having:
- one pair of sides for assembly by pivoting the side of one panel into the homologous side of another already placed panel, and
- one pair of transverse sides (1, 2) for assembly by nesting of shapes and clip-fastening by this movement into the homologous transverse side of another already placed panel,
- the first side (1) of this pair of sides comprising a hook (11) and a first assembly cavity (12),
* opening into the top (101) of the panel (100),
* traversed by the junction plane (PJ) of the two sides (1, 2), and having
* a locking cavity (13) set back from the junction plane (PJ) and whose upper side (131) forms a bearing surface,
- the second side (2) of this pair of sides having a second assembly cavity (22) opening into the bottom (102) of the panel to receive the first hook (11) of the adjacent panel, and an inverted hook forming a projection (21) to come into the first assembly cavity (12) of the first side of this adjacent panel,
* the face of the projection (21) comprising a tip (24) whose bearing surface is in the junction plane (PJ) in order to reach the top (101) of the panel,
* a clearance (23) set back from the junction plane (PJ) being extended towards the bottom (102) by a flexible latch (3), in the form of an inclined tab, oriented towards the top (101) and whose base (41) emanates from the projection (21),
which method is **characterized in that**
- the cross section of the blank of the pair of transverse sides (1, 2) is machined by milling, giving the first side (1) its final cross section, and, by machining by milling, there is formed on the second side (2) an assembly cavity (22) opening into the bottom (102) of the profile and a projection (21) provided with a tip (24) and followed by a clearance (23) set back from the junction plane (PJ) and whose bottom wall (231) joins an incipient groove (32) and is extended by a tab (4) projecting from the base (41) of the projection (21),
- the zone (Z) of the base (41) of the tab (4) is heated locally (II),
- then, when this zone (Z) is softened, the tab (4) is lifted (III) in the direction of the clearance (23) to form the latch (3), and
- the shape is stabilized by cooling it (IV) to obtain the final shape of the two transverse sides (1, 2) of the panel.
